# EUROPEAN PATENT APPLICATION

(11) **EP 4 257 949 A1**
(43) Date of publication of application: **11.10.2023**
(21) Application number: 21903361.0
(22) Date of filing: 06.12.2021
(51) Int. Cl.: G01N 1/40

(54) **EVAPORATIVE CONCENTRATION MECHANISM, ANALYSIS DEVICE PROVIDED WITH SAME, AND CONTROL METHOD FOR EVAPORATIVE CONCENTRATION MECHANISM**

(30) Priority: 07.12.2020 JP 2020202947
(71) Applicant: HITACHI HIGH-TECH CORPORATION, Tokyo 105-6409 (JP)
(72) Inventor: IWASA Sho, Tokyo 105-6409 (JP); MAEDA Jun, Tokyo 105-6409 (JP)
(74) Representative: Strehl Schübel-Hopf & Partner
(86) International application number: PCT/JP2021/044695
(87) International publication number: WO 2022/124260

(57) **Abstract**

An evaporative concentration mechanism is achieved, which accurately evaporates and concentrates a small quantity of a sample liquid for a short period of time, regardless of the composition of the sample liquid or the surrounding environmental conditions.

An evaporative concentration mechanism includes a container 1 that accommodates a sample liquid; a heating unit 3 that heats the container; a liquid level sensor 6 that detects a liquid level height of the sample liquid accommodated in the container; and a control unit 5 that controls a temperature of the heating unit, in which the control unit 5 controls the temperature of the heating unit based on a liquid level of the sample liquid detected by the liquid level sensor 6. Accordingly, a small quantity of a sample liquid can be accurately evaporated and concentrated for a short period of time, regardless of the composition of the sample liquid or the surrounding environmental conditions.

## Description

### Technical Field

The present invention relates to an evaporative concentration device that evaporates and concentrates a sample liquid as a measurement pretreatment of an analyzer.

### Background Art

In order to achieve high sensitivity of an analyzer, evaporative concentration may be performed to increase a concentration of an analysis target component by evaporating a solvent in a sample liquid containing the analysis target component.

As a technique for performing the evaporative concentration, for example, PTL 1 discloses a solidification device for radioactive liquid waste, the solidification device including: a storage speed detector that detects a storage speed of a condensate liquid generated from a gas drawn out from an evaporator; and a heating controller that controls heating of the radioactive liquid waste so that the storage speed becomes a predetermined value.

### Citation List

### Patent Literature

PTL 1: JP2002-148389A

### Summary of Invention

### Technical Problem

Generally, the analyzer is required to analyze accurately a small quantity of a sample containing various kinds of sample components and solvent compositions in a short period of time. Meanwhile, an evaporation rate varies depending on the solvent compositions, ambient temperature, exhaust conditions, and the like, and when the evaporation rate is excessively slow, the concentration of the analysis target component cannot be sufficiently increased within a predetermined time. In addition, when the evaporation rate is excessively fast and the sample is excessively concentrated, a quantity of a sample liquid required for analysis cannot be secured, and an additional treatment such as re-dilution by adding a solvent is required.

In the method of PTL 1, the evaporative concentration is performed so that the storage speed of the condensate liquid becomes the predetermined value, but a liquid quantity of the sample liquid is not directly detected, and thus a delay or an error is likely to occur in detection of an evaporation amount. Therefore, in the method, it is difficult to accurately control the evaporation amount with a small quantity of a sample liquid.

Accordingly, an object of the invention is to accurately evaporate and concentrate a small quantity of a sample liquid for a short period of time, regardless of a composition of the sample liquid or surrounding environmental conditions.

### Solution to Problem

In order to achieve the above object, the invention is configured as follows.

An evaporative concentration mechanism includes a container that accommodates a sample liquid; a heating unit that heats the container; a liquid level sensor that detects a liquid level height of the sample liquid accommodated in the container; and a control unit that controls a temperature of the heating unit, in which the control unit controls the temperature of the heating unit based on a liquid level of the sample liquid detected by the liquid level sensor.

### Advantageous Effects of Invention

According to the invention, a small quantity of a sample liquid can be accurately evaporated and concentrated in a short period of time, regardless of a composition of the sample liquid or surrounding environmental conditions.

### Brief Description of Drawings

[FIG. 1] FIG. 1 is a schematic diagram illustrating an overall configuration of an analyzer according to Embodiment 1.
[FIG. 2] FIG. 2 is a schematic diagram illustrating a configuration of the evaporative concentration mechanism of Embodiment 1.
[FIG. 3] FIG. 3 is a flowchart illustrating an evaporative concentration procedure of Embodiment 1.
[FIG. 4A] FIG. 4A is a graph illustrating a change in a liquid level when the evaporative concentration procedure of Embodiment 1 is executed.
[FIG. 4B] FIG. 4B is a graph illustrating a change in a temperature of a container holder when the evaporative concentration procedure of Embodiment 1 is executed.
[FIG. 5] FIG. 5 is a schematic diagram illustrating a configuration of the evaporative concentration mechanism of Embodiment 2.
[FIG. 6] FIG. 6 is a flowchart illustrating an evaporative concentration procedure of Embodiment 2.
[FIG. 7A] FIG. 7A is a graph illustrating a change in a liquid level when the evaporative concentration procedure of Embodiment 2 is executed.
[FIG. 7B] FIG. 7B is a graph illustrating a change in a temperature of a container holder when the evaporative concentration procedure of Embodiment 2 is executed.

### Description of Embodiments

Hereinafter, embodiments of the invention will be described with reference to the drawings.

### Embodiments

### (Embodiment 1)

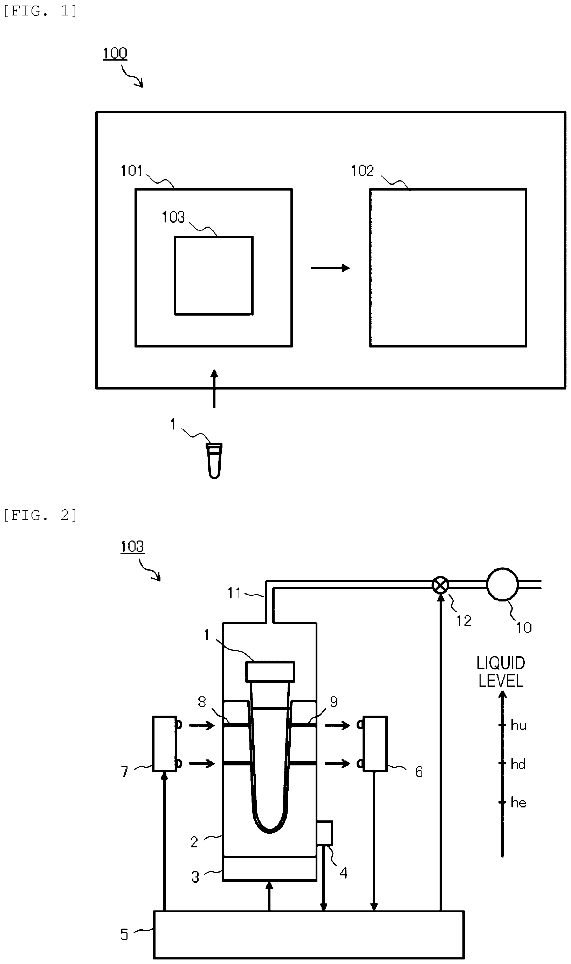

A configuration of Embodiment 1 will be described with reference to FIGS. 1 and 2.

FIG. 1 is a schematic diagram illustrating an overall configuration of an analyzer 100 according to Embodiment 1.

The analyzer 100 includes a pretreatment unit 101 and an analysis unit 102, and the pretreatment unit 101 includes an evaporative concentration mechanism 103. An operator places a sample container 1 accommodating a sample liquid containing an analysis target component in the pretreatment unit 101, and the pretreatment unit 101 performs an analysis pretreatment such as adjustment and purification. In this process, the evaporative concentration mechanism 103 increases a concentration of the analysis target component by evaporating a solvent in the sample liquid. The sample liquid obtained by the pretreatment is automatically or manually supplied to the analysis unit 102, and when the analysis is completed, an analysis result is output from the analysis unit 102.

FIG. 2 is a schematic diagram illustrating a configuration of the evaporative concentration mechanism 103.

The evaporative concentration mechanism 103 includes the sample container 1 accommodating the sample liquid and a container holder 2, and by heating the sample container 1 and the container holder 2 by a heating unit 3, the solvent in the sample liquid is evaporated to concentrate the sample liquid. The heating unit 3 is a heating element capable of controlling a heat generation amount, and examples thereof include a heater and a Peltier element. A control unit 5 measures a temperature of the container holder by a temperature sensor 4 attached to the container holder 2, and controls the heating unit 3 so that the measured temperature coincides with a predetermined heating temperature Th.

In addition, as a unit that measures a sample liquid level, a liquid level sensor 6 having detection positions at two positions of an upper detection point hu and a lower detection point hd is provided. An example of the liquid level sensor includes a photodiode. The liquid level sensor 6 detects transmitted light emitted from an opposing light source 7 and passing through a slit on light source side 8, the sample container 1, and a slit on liquid level sensor side 9. A material of the sample container 1 has optical transparency, and an intensity of the transmitted light changes depending on presence or absence of the sample liquid on an optical path. From this change, the control unit 5 detects that the sample liquid level passed through the upper detection point hu or the lower detection point hd.

Incidentally, a liquid level detection unit is used as an optical sensor in the present embodiment, but the same effect can be achieved by replacing the liquid level detection unit with a liquid level detection unit such as an ultrasonic sensor or a weight sensor. These alternative units does not require a slit, which simplifies a structure of the container holder 2. A material having no optical transparency can be used for the sample container 1.

In addition to the above description, an exhaust unit 10 may be provided to increase evaporation efficiency. An example of the exhaust unit includes a vacuum pump. The evaporated gas is discharged to the outside through an exhaust pipe 11 by the exhaust unit 10. The control unit 5 controls the exhaust by switching opening and closing of an exhaust valve 12 on the exhaust pipe 11.

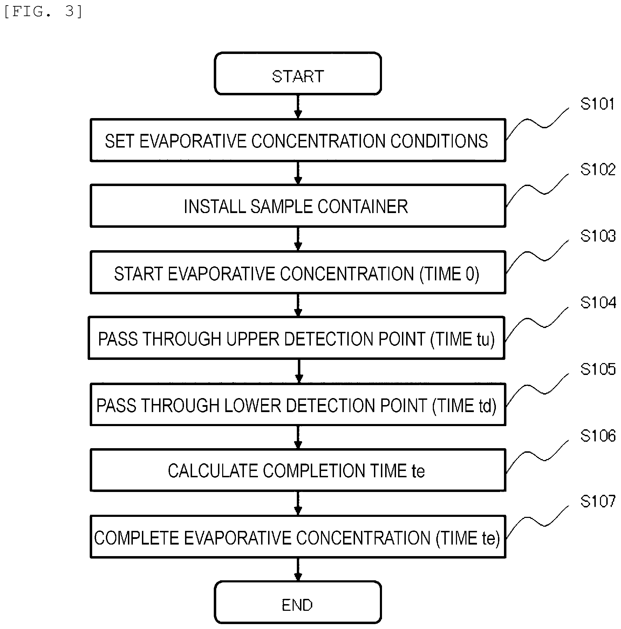

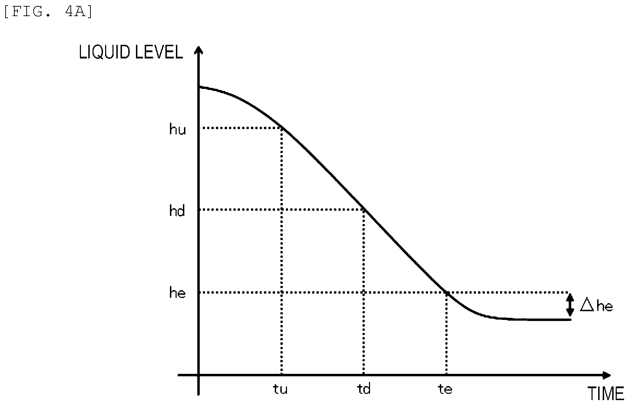

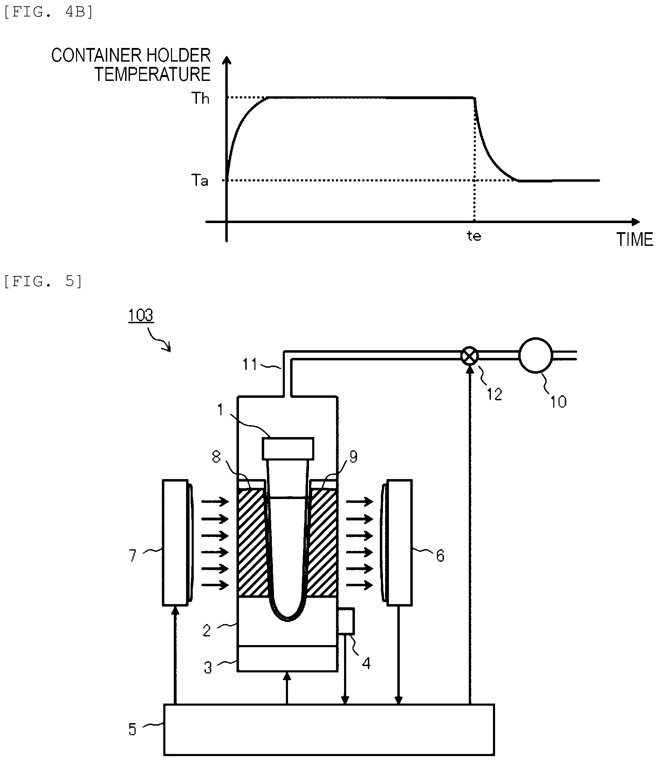

Next, an evaporative concentration procedure according to Embodiment 1 will be described with reference to FIGS. 3, 4A, and 4B.

FIG. 3 is a flowchart illustrating the evaporative concentration procedure, and FIGS. 4A and 4B are graphs illustrating changes in a temperature of a container holder and a liquid level during evaporative concentration.

First, the operator sets the heating temperature Th and a target liquid level he by the control unit 5 as evaporative concentration conditions (S101). These parameters are determined in consideration of boiling points of solvent species, a heat denaturing temperature of the analysis target component, a target evaporation rate, a target concentration ratio, and the like. Next, the sample container 1 accommodating the sample liquid is placed in the container holder 2 (S102), and the control unit 5 is instructed to start the evaporative concentration (S103). In response to this, the control unit 5 starts heating by the heating unit 3 and opens the exhaust valve 12 to start the evaporative concentration. When the evaporation starts, a liquid level lowers and the sample liquid sequentially passes through the upper detection point hu and the lower detection point hd (S104 and S105). The control unit 5 obtains an evaporation rate from a time point when the liquid level passes through each detection point, and calculates an expected time point te when the liquid level reaches the target liquid level he (S106). At the time point te, the control unit 5 stops the heating and closes the exhaust valve 12 to end the evaporative concentration (S107).

Incidentally, when the sample container 1 has a shape such as a conical shape having a non-constant cross-sectional area, the liquid level and a liquid quantity do not have a simple proportional relation. In this case, a relational expression between the liquid level and the liquid quantity of the sample container 1 is stored in the control unit 5 in advance, and the time point te is calculated using the expression in S106.

In addition, after the end of the evaporative concentration, there is a certain cooling delay until a liquid temperature is sufficiently cooled, and when the solvent evaporates during this time, the liquid level becomes lower than the target liquid level he (Δhe in FIG. 4A). This influence may be reduced by the following method.
**●**A volume in the exhaust pipe 11 between the sample container 1 and the exhaust valve 12 is minimized as much as possible.
**●**A cooling unit 13 (not shown) that cools the sample liquid is further provided, and the sample liquid is rapidly cooled immediately after the end of the evaporative concentration. If the heating unit 3 is the Peltier element, the heating unit 3 can also serve as the cooling unit 13.

As described above, according to Embodiment 1 of the invention, a small quantity of the sample liquid can be accurately evaporated and concentrated, regardless of a composition of the sample liquid or surrounding environmental conditions.

### (Embodiment 2)

Next, a configuration of Embodiment 2 will be described with reference to FIG. 5.

FIG. 5 is a schematic diagram illustrating a configuration of the evaporative concentration mechanism 103 according to Embodiment 2.

Incidentally, since the overall configuration of the analyzer 100 in Embodiment 2 is the same as that in Embodiment 1, an illustration and a description thereof will be omitted. In addition, the configuration of the evaporative concentration mechanism 103 is the same as that in Embodiment 1, and the same reference numerals in FIGS. 2 and 5 denote the same components, and repeated descriptions thereof will be omitted.

A difference from Embodiment 1 is that the liquid level sensor 6, the light source 7, the slit on light source side 8, and the slit on liquid level sensor side 9 have widths in a height direction, and a pattern of the intensity of the transmitted light can be measured in this range. An example of the liquid level sensor 6 includes a CCD image sensor. Accordingly, the control unit 5 can continuously measure the sample liquid level and perform more precise control than Embodiment 1.

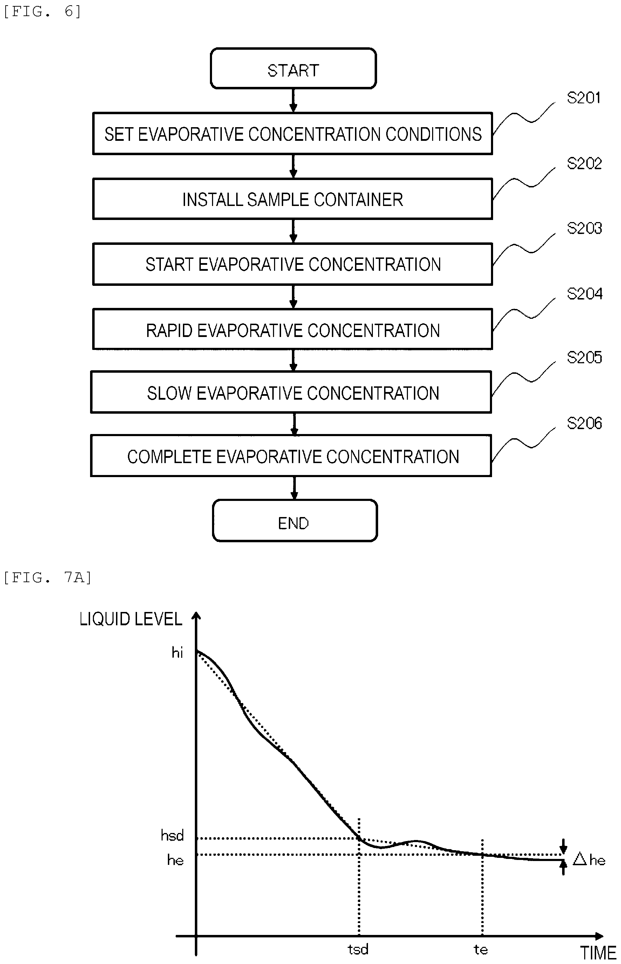

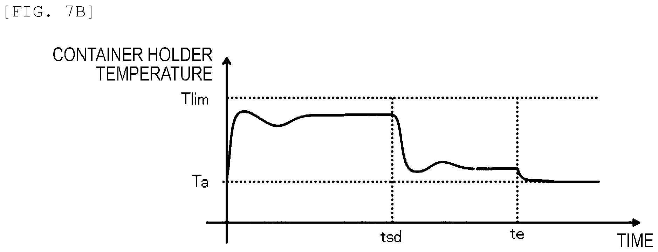

Next, an evaporative concentration procedure according to Embodiment 2 will be described with reference to FIGS. 6, 7A, and 7B.

FIG. 6 is a flowchart illustrating the evaporative concentration procedure, and FIGS. 7A and 7B are graphs illustrating changes in a temperature of a container holder and a liquid level during evaporative concentration.

A basic procedure of Embodiment 2 is the same as that in Embodiment 1, but as shown in the graph of the liquid level in FIG. 7A, the evaporative concentration is first performed at a rapid evaporation rate vf, and when the liquid level decreases to near the target liquid level (hsd), the rapid evaporation rate is switched to a low evaporation rate vsd. In addition, as shown in the graph of the temperature of the container holder in FIG. 7B, the heating temperature Th is adjusted within a range between a heating temperature upper limit Tlim and an environmental temperature ta, and feedback control is performed so that the evaporation rate coincides with a target value (vf or vsd).

First, the operator sets the heating temperature upper limit Tlim, the rapid evaporation rate vf, the low evaporation rate vsd, a deceleration liquid level hsd, and the target liquid level he by the control unit 5 as evaporative concentration conditions (S201). These parameters are determined in consideration of the boiling points of solvent species, the heat denaturing temperature of the analysis target component, the target evaporation rate, the target concentration ratio and the like as in Embodiment 1. Next, the sample container 1 accommodating the sample liquid is placed in the container holder 2 (S202), and the control unit 5 is instructed to start the evaporative concentration (S203) . In response to this, the control unit 5 sets a target value of the evaporation rate to vf, starts heating by the heating unit 3, and opens the exhaust valve 12 to start the evaporative concentration (S204). When the liquid level reaches the deceleration liquid level hsd, the target value of the evaporation rate is switched to vsd (S205). When the liquid level reaches the target liquid level he, the heating unit 3 is stopped, and the exhaust valve 12 is closed to end the evaporative concentration (S206).

In addition, the same method is also effective in Embodiment 2 with respect to a countermeasure when the cross-sectional area of the sample container 1 is not constant as described in Embodiment 1 and a countermeasure for an evaporation amount error due to the cooling delay after the end of the evaporative concentration.

As described above, Embodiment 2 of the invention has the following advantages in addition to the same effects as those of Embodiment 1.
- By switching the evaporation rate, it is possible to achieve both speeding up of the evaporative concentration and precise control of the evaporation amount near the target liquid level.
- Since the evaporation rate is controlled more continuously by the feedback control, it is less likely to be affected by a change in conditions during the evaporative concentration (a change in ambient temperature or exhaust conditions, and a change in solvent compositions when a mixed solvent is used).

The invention is not limited to the above-described embodiments and modifications, and includes other various modifications. The above-described embodiments have been described in detail for easy understanding of the invention of the present application, and the invention is not necessarily limited to those including all the configurations described above.

In addition, in the above-described embodiments, the evaporative concentration mechanism is shown as a part of the pretreatment unit for description, but the evaporative concentration mechanism according to the invention may be assembled in a sample pretreatment device independent of the analyzer, or may be achieved as an evaporative concentration device independent of the pretreatment unit.

### Reference Signs List

- 100:: Analyzer
- 101:: Pretreatment unit
- 102:: Analysis unit
- 103:: Evaporative concentration mechanism
- 1:: Sample container
- 2:: Container holder
- 3:: Heating unit
- 4:: Temperature sensor
- 5:: Control unit
- 6:: Liquid level sensor
- 7:: Light source
- 8:: Slit on light source side
- 9:: Slit on liquid level sensor side
- 10:: Exhaust unit
- 11:: Exhaust pipe
- 12:: Exhaust valve
- 13:: Cooling unit

## Claims

1. An evaporative concentration mechanism comprising:
a container that accommodates a sample liquid;
a heating unit that heats the container;
a liquid level sensor that detects a liquid level height of the sample liquid accommodated in the container; and
a control unit that controls a temperature of the heating unit, wherein
the control unit controls the temperature of the heating unit based on a liquid level of the sample liquid detected by the liquid level sensor.

2. The evaporative concentration mechanism according to claim 1, wherein
when it is detected that a liquid level of the sample liquid accommodated in the container is decreased to a predetermined height, the control unit controls an evaporation amount by stopping heating by the heating unit.

3. The evaporative concentration mechanism according to claim 1, wherein
the control unit predicts the time required for the liquid level of the sample liquid to be decreased to a predetermined height from a liquid level change rate of the sample liquid accommodated in the container, and when the time elapses, the control unit controls an evaporation amount by stopping heating by the heating unit.

4. The evaporative concentration mechanism according to claim 1, wherein
the control unit controls the temperature of the heating unit so that an evaporation rate of the sample liquid accommodated in the container becomes a predetermined value.

5. The evaporative concentration mechanism according to claim 1, wherein
the control unit controls the temperature of the heating unit depending on the properties of an analysis target component or a solvent contained in the sample liquid.

6. The evaporative concentration mechanism according to claim 1 further comprising an exhaust unit that exhausts an evaporated gas, wherein
the control unit controls an exhaust amount of the exhaust unit based on a liquid level of the sample liquid detected by the liquid level sensor.

7. The evaporative concentration mechanism according to claim 1 further comprising a cooling unit that cools the sample liquid, wherein
the control unit controls a temperature of the cooling unit based on a liquid level of the sample liquid detected by the liquid level sensor.

8. An analyzer comprising the evaporative concentration mechanism according to any one of claims 1 to 7.

9. A method of controlling an evaporative concentration mechanism, the mechanism comprising:
a container that accommodates a sample liquid;
a heating unit that heats the container; and
a liquid level sensor that detects a liquid level height of the sample liquid accommodated in the container, wherein
a temperature of the heating unit is controlled based on a liquid level of the sample liquid detected by the liquid level sensor.

10. The method of controlling the evaporative concentration mechanism according to claim 9, wherein
when it is detected that a liquid level of the sample liquid accommodated in the container is decreased to a predetermined height, an evaporation amount is controlled by stopping heating by the heating unit.

11. The method of controlling the evaporative concentration mechanism according to claim 9, wherein
the time required for the liquid level of the sample liquid to be decreased to a predetermined height is predicted from a liquid level change rate of the sample liquid accommodated in the container, and when the time elapses, the evaporation amount is controlled by stopping heating by the heating unit.

12. The method of controlling the evaporative concentration mechanism according to claim 9, wherein
the temperature of the heating unit is controlled so that an evaporation rate of the sample liquid accommodated in the container becomes a predetermined value.

13. The method of controlling the evaporative concentration mechanism according to claim 9, wherein
the temperature of the heating unit is controlled depending on the properties of an analysis target component or a solvent contained in the sample liquid.

14. The method of controlling the evaporative concentration mechanism according to claim 9 further comprising an exhaust unit that exhausts an evaporated gas, wherein
the exhaust amount of the exhaust unit is controlled based on a liquid level of the sample liquid detected by the liquid level sensor.

15. The method of controlling the evaporative concentration mechanism according to claim 9 further comprising a cooling unit that cools the sample liquid, wherein
a temperature of the cooling unit is controlled based on a liquid level of the sample liquid detected by the liquid level sensor.
